(19)

**Europäisches Patentamt**

**European Patent Office**

**Office européen des brevets**

(11) **EP 4 579 182 A1**

(12) **EUROPEAN PATENT APPLICATION**

(43) Date of publication:
**02.07.2025 Bulletin 2025/27**

(21) Application number: **23220886.8**

(22) Date of filing: **31.12.2023**

(51) International Patent Classification (IPC):
**G01C 15/00** (2006.01)

(52) Cooperative Patent Classification (CPC):
**G01C 15/002**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Hilti Aktiengesellschaft**
**9494 Schaan (LI)**

(72) Inventor: **Gloor, Thomas**
**9495 Triesen (LI)**

(74) Representative: **Hilti Aktiengesellschaft**
**Corporate Intellectual Property**
**Feldkircherstrasse 100**
**Postfach 333**
**9494 Schaan (LI)**

(54) **METHOD FOR DETERMINING AND VISUALIZING AN ACCURACY MAP**

(57) A computer-implemented method for determining for a working area at a worksite, in which a surveying instrument is deployed at a station, an accuracy map, which shows for the working area at least one accuracy that can be achieved during operating the surveying instrument, the method being performed by a computer system and comprising the steps:
- Dividing the working area in a grid of pixels,
- Computing a pose and corresponding variances and covariances for the station of the surveying instrument,

- Computing for at the least one point of the pixels, the accuracy that can be achieved during measuring and/or layouting with the surveying instrument based on the pose, the variances and covariances, and measuring accuracies,
- Computing the accuracy map based on the accuracies computed for the points of the pixels,
- Instructing a display to visualize a graphical representation of the accuracy map.

FIG. 6B

EP 4 579 182 A1

**Description**

The present invention relates to a method for determining in a worksite an accuracy map according to the definition of claim 1, to a computer program according to the definition of claim 6, and to an apparatus according to the definition of claim 6.

**Background of the invention**

Surveying instruments, such as total stations, are used in construction industries to take individual, highly accurate measurements within a worksite, using a highly precise electronic distance measuring device and highly accurate motors to rotate this electronic distance measuring device. Centered within a total station is its coordinate frame. The orientation of the coordinate frame is usually such that the stations x-axis pointing towards right, y-axis pointing towards the floor, and z-axis pointing into forward direction.

Known workflows to determine the pose (position and orientation) of a total station are based on manually or automatically taking measurement samples of distance and angle data in the worksite. Based on a scalable mathematical equation system, the pose can be calculated with a varying degree of precision, depending on the amount of sampling information considered. To solve the pose calculation, a minimum number of measurement samples needs to be taken, while an increasing number of measurement samples usually leads to the formation of an overdetermined mathematical equation system and an overall improved accuracy of the pose calculation.

The basic concept of surveying using a total station is that at an initial phase, a number of control points are positioned at scattered locations at the worksite to be surveyed. Typically, control points are materialized by prisms, cat-eyes, reflective foils, or other forms of reflective targets for returning the laser beam from the total station. The exact location of each control point is determined and logged in terms of coordinates on a specified coordinate frame, typically the coordinate frame of a floorplan of the worksite. A total station can then sight a number of these control points to determine its absolute position on that X, Y, Z coordinate frame using standard triangulation techniques.

In operation, the operator determines the distance and angle data successively for each control point. These data are stored in the total station's computer system together with the absolute position data for the respective control points, the latter position data being preloaded into the total station. The total station then implements an algorithm, generally known as a free-stationing algorithm, to determine its pose from the sightings of those control points. The positioning accuracy of a total station is inversely proportional to the square root of the number of control points it can exploit from its location, the angular distribution of those control points, as well as the stability of the worksite at which the control points and the total station are deployed.

Typically, the pose and its standard deviation are shown to the operator as numerical values and the interpretation of the quality is left to the operator and depends on his experience. To support the operator in the interpretation of the pose and its quality, Leica has released in November 2022 a new version v7.5 of their iCON Field software and included a functionality that shows to the operator a recommended working area that is a polygon created by the control points used for computing the pose. The disadvantage of the known functionality is that the working area is not evaluated based on an accuracy threshold that can be achieved during measuring and/or layouting with the total station.

**Summary of the invention**

Therefore, what is desired is a method for determining an accuracy map, .... An operator of the surveying instrument should be supported in the interpretation of the quality of the pose and in the accuracy, he can achieve during measuring and/or layouting with the surveying instrument.

These objectives are achieved by realizing the features of the independent claims. Features which further develop the invention in an advantageous manner are described in the dependent claims.

According to an aspect of the present invention, there is provided a computer-implemented method for determining for a working area at a worksite, in which a surveying instrument is deployed at a station, an accuracy map, which shows for the working area at least one accuracy that can be achieved during operating the surveying instrument, the method being performed by a computer system and comprising the steps:

- Dividing the working area in a grid of pixels,
- Computing a pose and corresponding variances and covariances for the station of the surveying instrument,
- Computing for at the least one point of the pixels, the accuracy that can be achieved during measuring and/or layouting with the surveying instrument based on the pose, the variances and covariances, and measuring accuracies,
- Computing the accuracy map based on the accuracies computed for the points of the pixels,
- Instructing a display to visualize a graphical representation of the accuracy map.

The method for determining an accuracy map according to the present invention supports the operator of the surveying instrument in understanding the results he achieved during stationing of the surveying instrument. To determine the accuracy map, the predefined working area is divided in a grid of pixels. That grid of pixels is used to compute the accuracy for at least one representative point of the pixels, the representative point can be a center point or any other point of the pixels. The accuracy map is computed by the computer system based on the pose, the variances and covariances for the station, and on measuring accuracies. Finally, a graphical representation of the accuracy map is shown on a display.

The operator is supported by the graphical representation of the accuracy map. The values represented by the accuracy map would normally be much harder for the operator to understand if presented numerically in a spreadsheet, especially if the data set is large or complex. The accuracy map enables operators to visualize data and understand it easily. The operator can easily check via the graphical representation if he can achieve the required accuracy during layouting or measuring with the surveying instrument at the worksite.

Preferably, the working area is defined by the computer system based on the known coordinates of a set of control points in a first coordinate frame of the worksite. The definition of the working area is necessary to define that area of the worksite the operator is interested in during operating the surveying instrument.

Preferably, the accuracy map is related to the worksite and stored in the computer system and/or stored to a memory connected to the computer system and the accuracy map is provided for use in operating the surveying instrument. By providing the accuracy map for use in operating the surveying instrument, the operator is supported in the interpretation of the data, he can easily check via the graphical representation of the accuracy map if he can achieve the required accuracy.

Preferably, the accuracy map is provided for use in layouting a point of interest and upon selecting the point of interest and defining an accuracy threshold, it is checked by the computer system if the accuracy threshold can be achieved, wherein:

- upon verification that the accuracy threshold can be achieved for the point of interest, a predefined action is performed, the predefined action comprising generating a message stating that the accuracy threshold can be achieved for the point of interest, and

- upon verification that the accuracy threshold cannot be achieved for the point of interest, a predefined action is performed, the predefined action comprising generating a message stating that the accuracy threshold cannot be achieved for the point of interest.

By checking via the computer system whether a predefined accuracy threshold can be achieved for a point of interest, the operator is supported in achieving the required accuracy.

In a preferred embodiment, the pose, and the corresponding variances and covariances are computed by a free-stationing algorithm based on a set of control points having known first coordinates in a first coordinate frame of the worksite and at least a sub-set of the set of control points having known second coordinates in a second coordinate frame of the surveying instrument.

Free-stationing algorithms are typically used to determine the pose, and corresponding variances and covariances of a surveying instrument in the first coordinate frame of the worksite. To compute the pose, at least two control points are required, the pose is computed from the first coordinates of the control points in the first coordinate frame and from the second coordinates in the second coordinate frame. The quality of the pose is proportional to the number of control points, the angular distribution of those control points, and the stability of the worksite at which the control points and the surveying instrument are deployed. The graphical representation of the layout area can support the operator in finding an appropriate selection of control points to determine the pose of the surveying instrument via a free-stationing algorithm.

Preferably, from the set of control points at least one further control point being different from the sub-set of control points is selected, second coordinates are determined for the at least one further control point by the surveying instrument in the second coordinate frame, and a new sub-set of control points containing the sub-set of control points and the at least one further control point is defined, the method further comprising:

- Computing a new pose and corresponding variances and covariances for the station of the surveying instrument,
- Computing for at least one point of the pixels, the accuracy that can be achieved during measuring and/or layouting with the surveying instrument based on the new pose, the variances and covariances, and the measuring accuracies,
- Computing a new accuracy map based on the accuracies computed for the pixels of the grid,
- Instructing the display to visualize a graphical representation of the new accuracy map.

By computing accuracy maps for different sub-sets of control points and visualizing those accuracy maps, the operator is supported in the interpretation of the data and the accuracy he can achieve during layouting and/or measuring with the surveying instrument. It is easy for the operator to identify the influence of a further control point on the accuracy map.

According to a further aspect of the present invention, there is provided a computer program comprising instructions, which, when executed by a computer system, cause the computer system to carry out the method according to the present invention. The computer program may be stored on the computer system or on a computer-readable medium communicatively connected to the computer system. The term "computer-readable medium" includes, but is not limited to, portable or non-portable storage devices, optical storage devices, and various other mediums capable of storing, containing, or carrying instruction(s) and/or data.

According to a further aspect of the present invention, there is provided an apparatus comprising means for carrying out the method according to the present invention.

## Brief Description of the drawings

The aspects of the invention are described or explained in more detail below, purely by way of example, with reference to working examples shown schematically in the drawing. Identical elements are labelled with the same reference numerals in the figures. The described embodiments are generally not shown true in scale, and they are also not to be interpreted as limiting the invention. Specifically,

FIG. 1          shows an operator using a surveying instrument deployed at a worksite, the surveying instrument comprising a measuring unit mounted on a tripod and a remote controller connected via a communication link to the measuring unit,

FIGS. 2A, B    show an exemplary version of the measuring unit used in the surveying instrument of FIG. 1 (FIG. 2A) and a block diagram of the main components of the measuring unit as illustrated in FIG. 2A (FIG. 2B),

FIGS. 3A, B    show an exemplary version of the remote controller used in the surveying instrument of FIG. 1 (FIG. 3A) and a block diagram of the main components of the remote controller as illustrated in FIG. 3A (FIG. 3B),

FIG. 4          shows a method for determining an accuracy map according to the present invention in a flow chart,

FIGS. 5A, B    illustrate a graphical user interface of an exemplary implementation of the method for determining an accuracy map according to the present invention,

FIGS. 6A, B    illustrate the graphical user interface of FIG. 5 during stationing of a total station via a free-stationing process.

## Detailed Description

Reference will now be made in detail to the present preferred embodiment, an example of which is illustrated in the accompanying drawings. It is to be understood that the technology disclosed herein is not limited in its application to the details of construction and the arrangement of components set forth in the following description or illustrated in the drawings. The technology disclosed herein is capable of other embodiments and of being practiced or of being carried out in various ways.

Also, it is to be understood that the phraseology and terminology used herein is for the purpose of description and should not be regarded as limiting. All definitions, as defined and used herein, should be understood to control over dictionary definitions, definitions in documents incorporated by reference, and/or ordinary meanings of the defined terms. The indefinite articles "a" and "an", as used herein in the specification and in the claims, unless clearly indicated to the contrary, should be understood to mean "at least one". The phrase "and/or", as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one of a number or list of elements, and, optionally, additional unlisted items. Only terms clearly indicated to the contrary, such as "only one of" or "exactly one of", or, when used in the claims, "consisting of" will refer to the inclusion of exactly one element of a number or list of elements. In general, the term "or" as used herein shall only be interpreted as indicating exclusive alternatives (ke. "one or the other but not both") when preceded by terms of exclusivity, such as "either", "one of", "only one of", or "exactly one of", "consisting essentially of", when used in the claims, shall have its ordinary meaning as used in the field of patent law.

As used herein in the specification and in the claims, the phrase "at least one" in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

The use of "including, or "comprising, or "having" and variations thereof herein is meant to encompass the items listed thereafter and equivalents thereof as well as additional items. Unless limited otherwise, the terms "connected", "coupled", and "mounted", and variations thereof herein are used broadly and encompass direct and indirect connections, couplings, and mountings. In addition, the terms "connected" and "coupled", and variations thereof are not restricted to physical or mechanical connections or couplings.

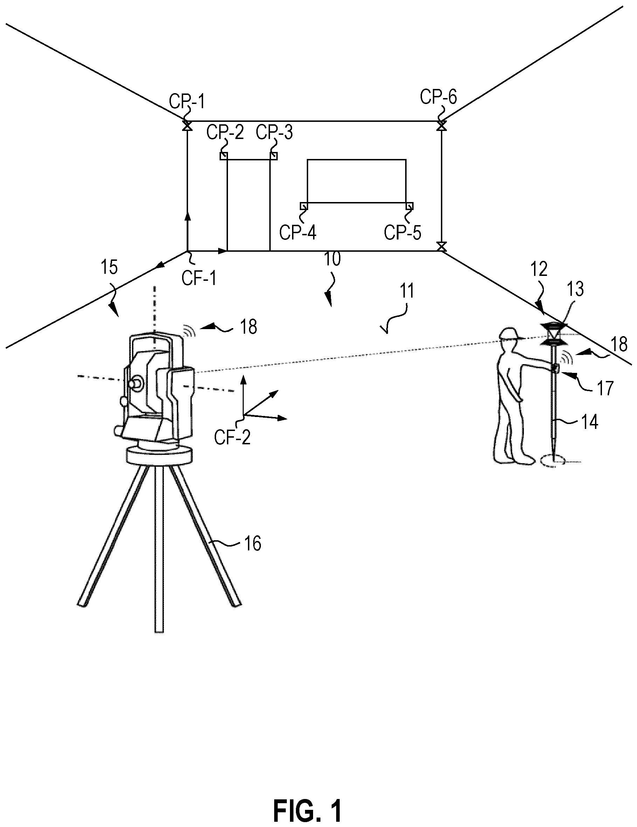

FIG. 1 shows an operator using a surveying instrument 10 deployed at a worksite 11. The worksite 11 may be a construction site, inside or outside, or a surveying site, amongst others. In addition to the surveying instrument 10, a target 12 that is remote from the surveying instrument 10 may be deployed at the worksite 11. The target 12 may include a reflector 13, such as a prism and/or a cat-eye, that is mounted on top of a pole 14.

The surveying instrument 10 is formed as a total station and comprises a measuring unit 15 that is mounted on a mounting support structure in the form of a tripod 16. The surveying instrument 10 also comprises a removable control panel in the form of a remote controller 17 that can be used for remote control of the measuring unit 15 via a wireless connection 18.

Before the operator can use the total station 10 for layouting, measuring and/or other tasks, the total station must be stationed via a stationing process to the worksite 11. From prior art, different stationing processes are known, such as free-stationing process, model-based stationing process, automatic stationing process, or any other stationing process.

The basic concept of free-stationing processes is that at an initial phase, a number of control points, here control points **CP-1, CP-2, CP-3, CP-4, CP-5, CP-6,** are positioned at scattered locations at the worksite 11. The control points are materialized by prisms, cat-eyes, reflective foils, or other forms of reflective targets for returning the laser beam from the total station. The exact location of the control points is determined and logged in terms of coordinates on a specified coordinate frame, here the coordinate frame of the worksite 11.

To determine the pose (position and orientation) of the total station 10 in the coordinate frame of the worksite 11, the total station 10 sights a number of the control points and takes measurement samples of distance and angle data in its coordinate frame. To differ between the coordinate frames, the coordinate frame of the worksite 11 is called "first coordinate frame" CF-1 and the coordinate frame of the total station 10 is called "second coordinate frame" **CF-2.** The coordinates in the first coordinate frame CF-1 are called "first coordinates" and the coordinates in the second coordinate frame CF-2 are called "second coordinates".

Based on a mathematical equation system, the pose of the total station can be calculated from the first coordinates of the control points in the first coordinate frame CF-1 and from the second coordinates of the control points in the second coordinate frame CF-2. With increasing number of measurement samples and a good angular distribution of the control points at the worksite 11 the position accuracy of the pose can increase.

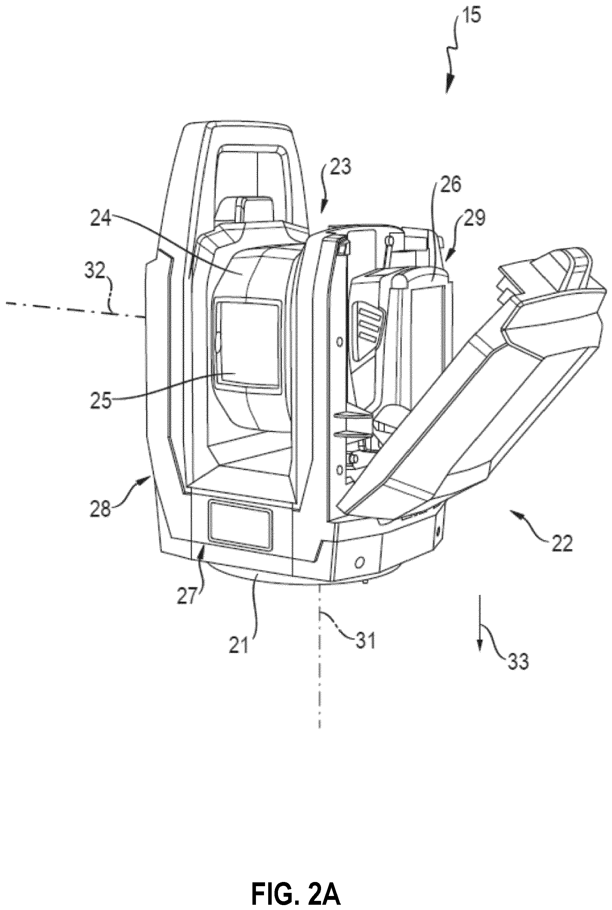

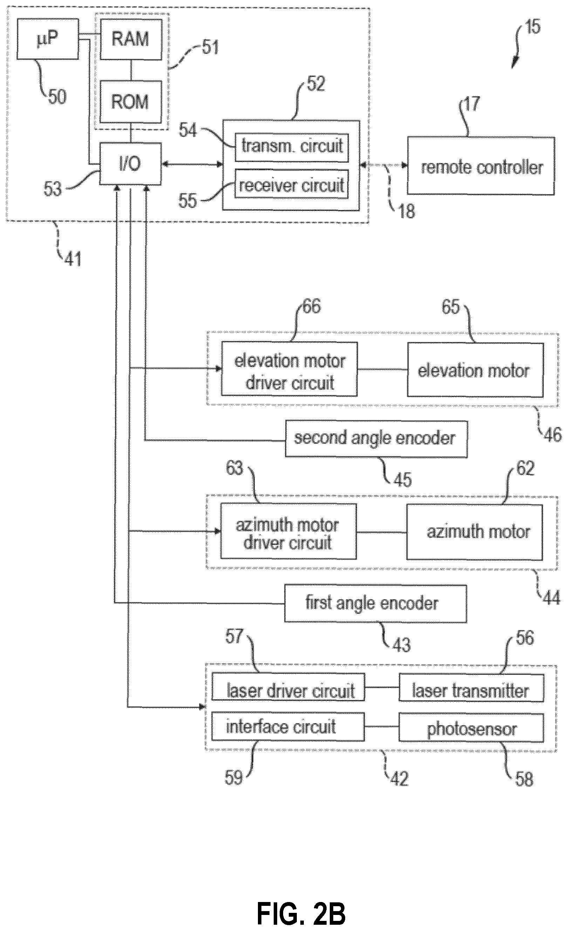

**FIGS. 2A, B** show an exemplary version of the measuring unit 15 used in the surveying instrument 10 of FIG. 1 in a perspective view (FIG. 2A) and a block diagram of the main components of the measuring unit 15 as illustrated in FIG. 2A (FIG. 2B).

The surveying instrument 10 is designed as robotic total station and the measuring unit 15 comprises a base **21,** a support **22,** and a measuring head **23.** The measuring head 23 is enclosed by a housing **24,** which includes an exit window **25.** In the housing 24, a distance measuring device that can emit a distance measuring beam and a tracking device that can emit a radiation are arranged. The distance measuring beam and the radiation are emitted through the exit window 25 to leave the housing 24.

In the exemplary version of FIG. 2A, the support 22 is U-formed and includes a bottom portion **27,** a first side portion **28,** and a second side portion **29.** The support 22 can rotate completely around its circumference at a full 360° angle with respect to the base 21 about a first axis of rotation **31.** The measuring head 23 is pivotably mounted to the support 22 about a second axis of rotation **32** and is arranged between the first side portion 28 and the second side portion 29 of the support. Usually, the first axis of rotation 31 is aligned parallel to a local direction of gravitation **33,** and the second axis of rotation 32 is aligned perpendicular to the local direction of gravitation 33.

An azimuth motor device and a first angle encoder may be located in the bottom portion 27 of the support 22 and allow to rotate the measuring unit 15 about the first axis of rotation 31 and to determine the direction of the distance measuring beam in a first plane perpendicular to the first axis of rotation 31. An elevation motor device and a second angle encoder may be located in the first side portion 28 of the support 22 and allow the measuring head 23 to pivot about the second axis of rotation 32 and to determine the direction of the distance measuring beam in a second plane perpendicular to the second axis of rotation 32. To make the instrument 12 fully automatic, a self-leveling device, which may be arranged in the bottom portion 27 of the support 22, can be included.

FIG. 2B shows a block diagram of the main components of the measuring unit 15 of the surveying instrument 10. The measuring unit 15 includes a first electronic device **41,** a distance measuring device **42,** a first angle encoder **43,** an azimuth motor device **44,** a second angle encoder **45,** and an elevation motor device **46.** Optionally, the measuring unit 15 can additionally include one or more cameras, such as a tracking camera configured to track a reflector target, or an aiming camera configured to let the user aim to a point of interest.

The first electronic device 41 comprises a first processing circuit ($\mu$P) **50,** a first memory circuit **51** that may include associated random-access memory (RAM) and read only memory (ROM), a first communications circuit **52,** and a first input/output (I/O) interface circuit **53.** The first processing circuit 50, also called device control unit, may communicate with the first memory circuit 51 and first communications circuit 52 and is configured to control the laser instrument 12. The first communications circuit 52 includes a first transmitter circuit **54** and a first receiver circuit **55** and is configured to be connected to a communications circuit of the remote controller via the communication link. The first input/output interface circuit 53 is an interface between the first processing circuit 50 and the various types of motor driver circuits and sensor circuits of the measuring unit 15.

The distance measuring device 42 includes a laser transmitter **56,** a laser driver circuit 57, a photosensor **58,** and a laser receiver interface circuit **59.** The laser driver circuit 57 provides current for the laser transmitter 56 which emits a distance measuring beam. The photosensor 58 receives at least a part of the distance measuring beam reflected at a target or a surface of the worksite, and the current signal that is outputted by the photosensor 58 is directed to the laser receiver interface circuit 59. After appropriate amplification and demodulation, the signal is sent via the first input/output interface circuit 53 to the first processing circuit 50.

The first angle encoder 43 provides input signals to the first processing circuit 50, so that it knows exactly in which horizontal angle the laser transmitter 56 is arranged in the horizontal plane; the output signal of the first angle encoder 43 is directed to the first input/output interface circuit 53. The azimuth motor device 44 includes an azimuth motor **62,** which is the motive force to rotate the main housing 22 of the measuring unit 15 about the first axis of rotation 31, and an azimuth motor driver circuit **63,** which will provide the proper current and voltage to drive the azimuth motor 62.

The second angle encoder 45 provides input signals to the first processing circuit 50, so that it knows exactly in which second angle the laser transmitter 56 is arranged in the second plane; the output signal of the second angle encoder 45 is directed to the first input/output interface circuit 53. The elevation motor device 46 includes an elevation motor **65,** which is the motive force to pivot the measuring head 23 about the second axis of rotation 32, and an elevation motor driver circuit **66,** which will provide the proper current and voltage to drive the elevation motor 65.

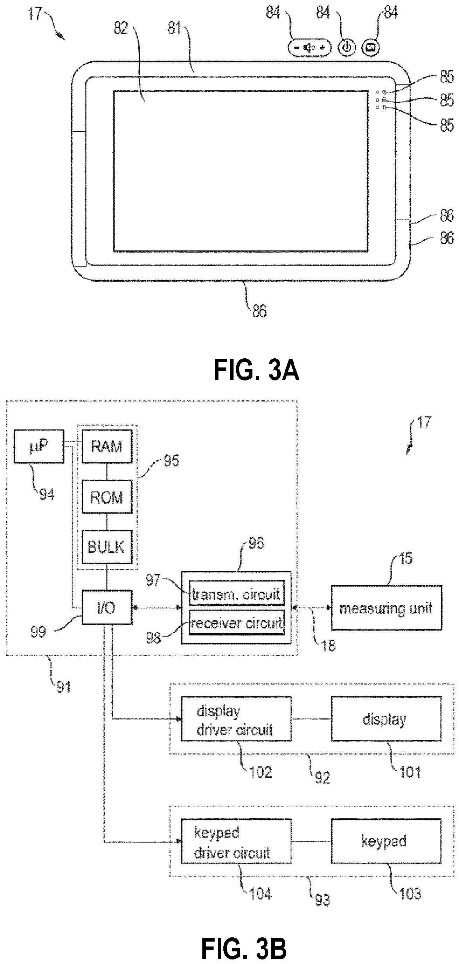

**FIGS. 3A, B** show an exemplary version of the remote controller 17 used in the surveying instrument 10 of FIG. 1 in a front view (FIG. 3A) and a block diagram of the main components of the remote controller 17 as illustrated in FIG. 3A (FIG. 3B).

The remote controller 17 is designed as tablet computer and includes a housing **81,** a touch screen display **82,** a battery **83,** a set of buttons **84,** e.g., volume control button, power on/off button, and display control button, a set of indicators **85,** e.g., for operating status, data storage status, and battery status, a set of connectors **86,** e.g., for docking, data storage, and USB, and a card slot **87.**

FIG. 3B shows a block diagram of the main components of the remote controller 17. The remote controller 17 may include a second electronic device **91,** a display device **92,** and an input device **93.**

The second electronic device 91 comprises a second processing circuit ($\mu$P) **94,** a second memory circuit **95** that may include associated random-access memory (RAM), read only memory (ROM), and some type of bulk memory (BULK), a second communications circuit **96,** and a second input/output (I/O) interface circuit **97.** The second processing circuit 94 may communicate with the second memory circuit 95 and second communications circuit 96 and is configured to control the remote controller 17. The second communications circuit 96 includes a second transmitter circuit **98** and a second receiver circuit **99** and is configured to be connected to the first communications circuit 52 of the measuring unit 15 via the wireless communication 18. The second input/output interface circuit 97 is an interface between the second processing circuit 94 and the various driver circuits of the remote controller 17.

In the second memory circuit 95 several program codes having computer-executable instructions for performing a method may be stored. The stored program codes may include a program code for performing a method for determining for a worksite, at which a surveying instrument is deployed, a layout area, in which accuracies not larger than a predefined accuracy threshold can be achieved during operating the surveying instrument.

The method for determining a layout area is performed by a computer system having evaluation, data processing and/or control functionality. In the exemplary version of the surveying instrument 10, the computer system is integrated into the second processing circuit 94 of the second electronic device 91 of the remote controller 17. Alternatively, the computer system may be integrated into the first processing circuit 50, or into the first and second processing circuits 50, 94, or in any other type of suitable processing circuit.

The display device 92 includes a display **101** and a display driver circuit **102.** The display driver circuit will be in communication with the second I/O interface circuit 97 and provides the correct interface and data signals for the display 101. If the remote controller 17 is a laptop computer, for example, then this would be the standard display seen in most laptop computers. Or, if the remote controller 17 is a tablet computer or a smart phone, in which case the display device is a much smaller physical device, the display device 101 could be a touch screen display.

The user-operated input device 93 includes a keypad **103** and a keypad driver circuit **104.** The keypad driver circuit will be in communication with the second I/O interface circuit 97 and controls the signals that interface to the keypad 103. If the display device 101 is a touch screen display, then there may not be a separate keypad on the remote controller 17, because most of the command or data to input functions will be available by touching the display itself and the keypad is integrated in the touch screen display. There may be some type of power on/off button, but that would not necessarily be considered a true keypad and typically would not be used for entering data.

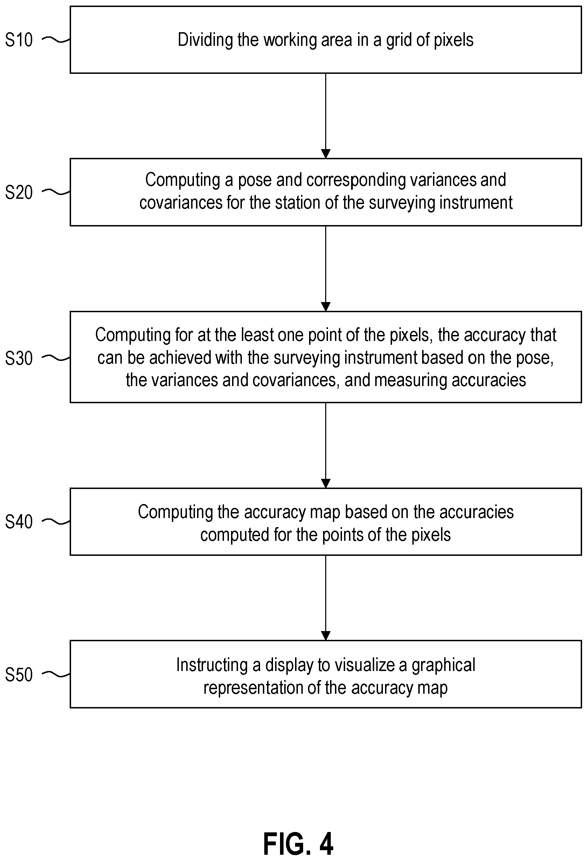

**FIG. 4** shows a method for determining for a working area of a worksite, in which a surveying instrument is deployed at a station, an accuracy map according to the present invention in a flow chart. The surveying instrument 10 deployed at the worksite 11 and the computer system 94 can be used to perform the method according to the present invention.

Measurements with the surveying instrument 10 are usually described by a well-established error model, where angle and distance measurements are treated as independent random variables with measuring accuracies $\sigma_{HA}$ for the horizontal angle HA and $\sigma_{HD}$ for the horizontal distance HD.

The method for determining for a working area an accuracy map is performed by the computer system 94 and comprises the following steps:

- Dividing the working area in a grid of pixels (step **S10),**
- Computing a pose ($E_S$, $N_S$, ori) and corresponding variances ($Q_{ES,ES}$, $Q_{NS,NS}$. $Q_{ori,\,ori}$) and covariances ($Q_{ES,ori}$, $Q_{NS,ori}$) for the station of the surveying instrument 10 (step **S20**),
- Computing for at the least one point of the pixels, the accuracy that can be achieved during measuring and/or layouting with the surveying instrument 10 based on the pose ($E_S$, $N_S$, ori), the variances ($Q_{ES,ES}$, $Q_{NS,NS}$, $Q_{ori,ori}$) and covariances ($Q_{ES,NS}$, $Q_{ES,ori}$ $Q_{NS,ori}$). and measuring accuracies ($\sigma_{HD}$, $\sigma_{HA}$) (step **S30**),
- Computing the accuracy map based on the accuracies computed for the points of the pixels (step **S40**), and
- Instructing a display 101 to visualize a graphical representation of the accuracy map (step **S50**).

The pose of the total station can be calculated by a free-stationing process, a model-based stationing process, an automatic stationing process, or any other stationing process. If the stationing process is a free-stationing process, at least two control points are used, the control points having known first coordinates in the first coordinate frame CF-1 of the worksite 11 and known second coordinates in the second coordinate frame CF-2 of the surveying instrument 10.

Although the steps of the method are illustrated in a particular order, in some embodiments, one or more steps may be executed in a different order than illustrated in FIG. 4. For example, the steps S10 and S20 can be executed in a different order.

In statistics, a covariance matrix is a square matrix giving the covariance values between each pair of elements of a given random vector.

The covariance matrix Qxx of the pose ($E_S$, $N_S$, ori) can be written as:

$$Qxx = \begin{bmatrix} Q_{E_S,E_S} & Q_{E_S,N_S} & Q_{E_S,ori} \\ Q_{N_S,E_S} & Q_{N_S,N_S} & Q_{N_S,ori} \\ Q_{ori,E_S} & Q_{ori,N_S} & Q_{ori,\,ori} \end{bmatrix}$$

Whereas the diagonal elements ($Q_{ES,ES}$, $Q_{NS,NS}$, $Q_{ori,ori}$) represent the variances of the variables $E_S$ and $N_S$, i.e., covariances of an element with itself, and the off-diagonal elements ($Q_{ES,NS} = Q_{NS,ES}$, $Q_{ES,}$ori $= Q_{ori,ES}$, $Q_{NS,ori} = Q_{ori,NS}$) represent the covariances between pairs of the elements $E_S$, $N_S$, ori.

An observation point OP can be denoted by variables HD and HA with HD being a horizontal distance and HA being a horizontal angle. With the pose ($E_S$, $N_S$, ori), the coordinates E and N of the observation point OP can be computed by:

$$E = E_S + HD \sin(HA + ori)$$

$$N = N_S + HD \cos(HA + ori)$$

The covariance matrix $\Sigma_{E,N}$ of E and N can be computed through variance propagation by

$$\Sigma_{E,N} = H\Sigma H^T \text{ with } \Sigma = \begin{bmatrix} Qxx & 0 & 0 \\ 0 & \sigma_{HA}^2 & 0 \\ 0 & 0 & \sigma_{HD}^2 \end{bmatrix}$$

and

$$H = \begin{bmatrix} 1 & 0 & HD\cos(HA + ori) & HD\cos(HA + ori) & \sin(HA + ori) \\ 0 & 1 & -HD\sin(HA + ori) & -HD\sin(HA + ori) & \cos(HA + ori) \end{bmatrix}$$

The accuracy u(OP) that can be achieved at the observation point OP can be denoted by

$$u(OP) = \sqrt{Trace\ \Sigma_{E,N}}$$

To compute the accuracy map for a working area, the working area is divided in a grid of pixels. For a plurality of pixels of the grid, the formula to compute the accuracy is used to compute the accuracy for at least one representative point of the pixels.

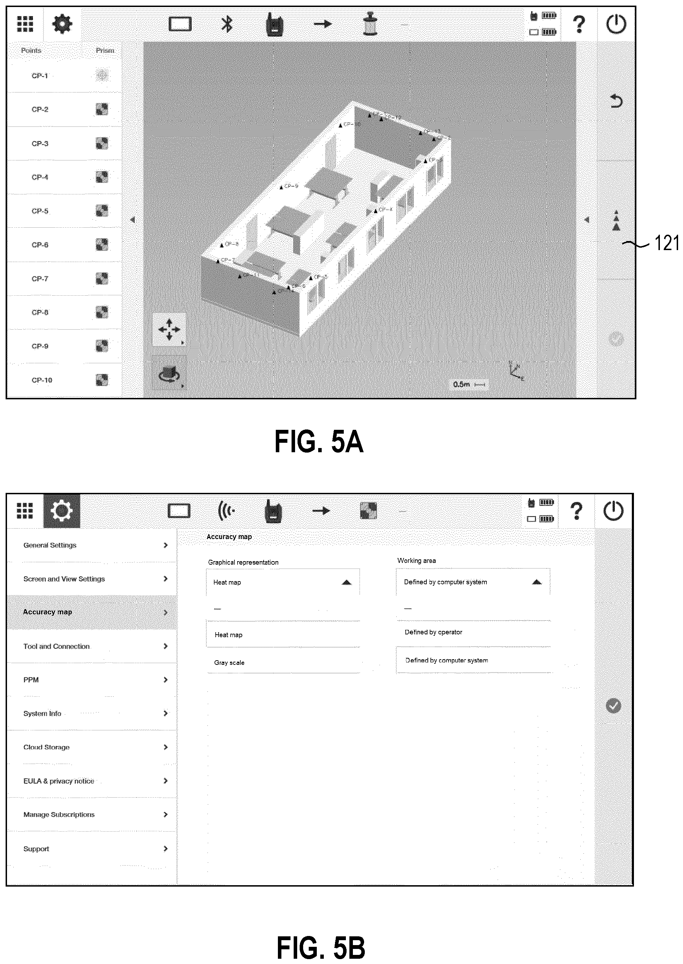

**FIGS. 5A, B** illustrate a graphical user interface of an exemplary implementation of the method for determining an accuracy map according to the present invention. Before an operator can use the total station 10 for layouting, measuring and/or other tasks at a worksite, the total station 10 must be stationed via a stationing process to the worksite 11.

In the exemplary version shown in FIG. 5A, the stationing process is a free-stationing process using a set of control points. At an initial phase, the operator has loaded a floorplan of the worksite and a set of control points **CP-1 to CP-13** to the computer system. The control points have known first coordinates in the first coordinate frame CF-1 of the worksite. To determine the pose of the total station 10 in the first coordinate frame CF-1, the total station 10 will sight a number of the control points and take measurement samples of distance and angle data in the second coordinate frame CF-2 of the total station 10. The measurements can be performed manually by the operator, semi-automatically or automatically by the total station 10. In the exemplary version, the control points are materialized by reflector foils (CP-1, CP-11, and CP-12), by two-dimensional cat-eyes (CP2 to CP-10), and by glass prisms (CP-13).

In the exemplary version of FIG. 5, the measurements are performed semi-automatically by the total station 10. The operator selects a control point from the set of control points by clicking and confirms his selection by clicking a measurement button **121.**

FIG. 5B illustrates the graphical user interface that allows the operator to define the accuracy map. In the exemplary version shown in FIG. 5B, the operator can select the type of graphical representation that is used for visualization and how the working area is defined. The graphical representation and the working area can be selected from a menu. In FIG. 5B, both menus for the accuracy threshold and the type of layout area are shown. This is done for illustration. In practice, only one menu can be shown.

The working area can be defined by the computer system based on the known coordinates of a set of control points in a first coordinate frame of the worksite or the working area can be defined by the operator as polygon. The definition of the working area is necessary to define that area of the worksite the operator is interested in during operating the surveying instrument.

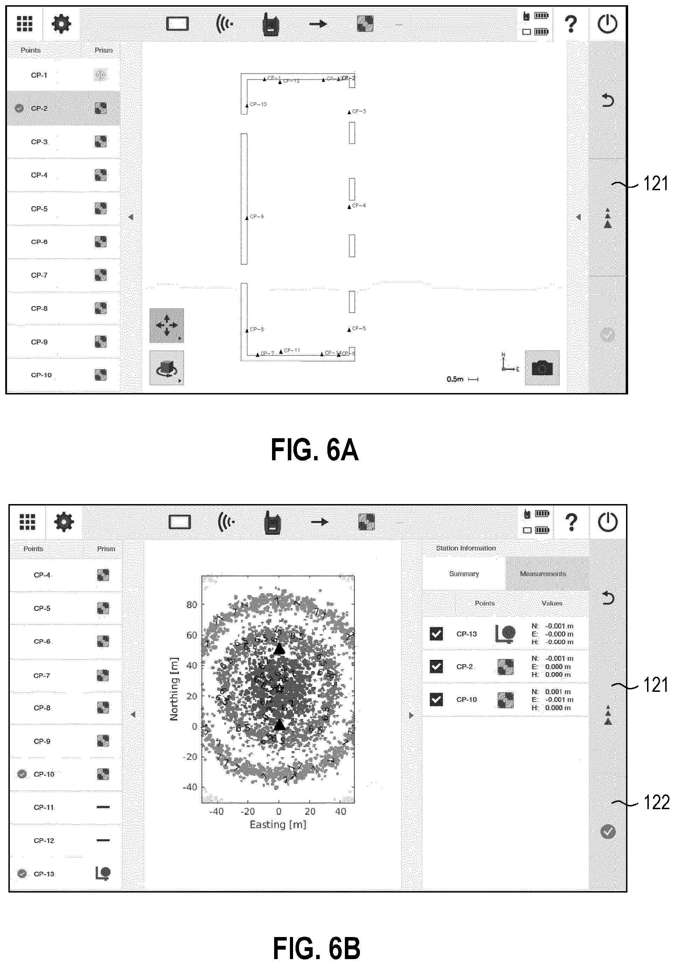

**FIGS. 6A, B** illustrate the graphical user interface of FIG. 5 during stationing of the total station 10 via a free-stationing process. As explained with respect to FIG. 5, the operator has loaded a floorplan of the worksite and the control points CP-1 to CP-13 to the computer system 94. Before starting the stationing process, the operator has decided how the working area is defined.

For stationing the total station 10, the operator selects a first control point, here control point CP-2, from the set of control points. Upon the operator's selection of CP-2 and confirming his selection by clicking the measurement button 121, the total station 10 is instructed by the computer system 94 to measure distance and angle data to the control point CP-2. Once the distance and angle data for the control point CP-2 have been measured, the measurement to CP-2 can be shown by highlighting the control point CP-2 in the floorplan.

Then, the operator selects a second control point from the set of control points, here control point CP-13. Upon the operator's selection of CP-13 and clicking the measurement button 121, the total station 10 is instructed by the computer system 94 to measure distance and angle data to the control point CP-13. Once the distance and angle data for CP-13 have been measured, the measurement to CP-13 can be shown by highlighting the control point CP-13 in the floorplan.

Since for at least two control points second coordinates are available in the second coordinate frame CF-2 of the total station 10, a pose, and corresponding variances and covariances can be computed by the computer system 94 from the first coordinates and second coordinates of the control points CP-2 and CP-13 (step S20). Once the pose and the corresponding variances and covariances are computed, for at the least one point of the pixels the accuracy that can be achieved during measuring and/or layouting with the total station 10 is computed based on the pose, the variances and covariances, and the measurement accuracies $\sigma_{HD}$, $\sigma_{HA}$ (step S30). Based on the accuracies computed for the points of the pixels, the accuracy map is computed by the computer system 94 (step S40). Finally, the display 101 is instructed to visualize a graphical representation of the accuracy map (step S50).

Upon visualizing the accuracy map corresponding to the control points CP-2 and CP-13, the operator can decide whether a further measurement should be performed, or the stationing process is over. By clicking the confirm button 122, the stationing process is over and the current values for the pose and the accuracy map are used for operating the total station 10.

To continue the stationing process, the operator selects a third control point from the set of control points, here control point CP-10. Upon the operator's selection of CP-10 and clicking the measurement button 121, the total station 10 is instructed by the computer system to measure distance and angle data to the control point CP-10. Once the distance and angle data for CP-10 have been measured, the measurement to CP-10 can be shown by highlighting the control point CP-10 in the floorplan.

Once the second coordinates for control point CP-10 are available, the steps S20, S30, S40 and S50 are repeated for the sub-set of the control points CP-2, CP-13, and CP-10. A new pose and corresponding variances and covariances are computed by the computer system 94 from the first coordinates and second coordinates of the control points CP-2, CP-13, and CP-10 (step S20). Once the new pose and the corresponding variances and covariances are computed, for at the least one point of the pixels the accuracy that can be achieved during measuring and/or layouting with the total station 10 is computed based on the new pose, the variances and covariances, and the measurement accuracies $\sigma_{HD}$, $\sigma_{HA}$ (step S30). Based on the accuracies computed for the points of the pixels, a new accuracy map is computed by the computer system 94 (step S40). Finally, the display 101 is instructed to visualize a graphical representation of the new accuracy map (step S50).

The new pose is a feature that corresponds to the term "pose" and "new pose" in the present invention and the new accuracy map is a feature that corresponds to the term "accuracy map" and "new accuracy map" in the present invention.

The accuracy map is provided for use in layouting a point of interest. Upon selecting a point of interest and defining an accuracy threshold that must be achieved during layouting, it is checked by the computer system 94 if the accuracy threshold can be achieved. Upon verification that the accuracy threshold can be achieved for the point of interest, a predefined action is performed, the predefined action comprising generating a message stating that the accuracy threshold can be achieved for the point of interest, and upon verification that the accuracy threshold cannot be achieved for the point of interest, a predefined action is performed, the predefined action comprising generating a message stating that the accuracy threshold cannot be achieved for the point of interest.

**Claims**

1. A computer-implemented method for determining for a working area at a worksite (11), in which a surveying instrument (10) is deployed at a station, an accuracy map, which shows for the working area at least one accuracy that can be achieved during operating the surveying instrument (10), the method being performed by a computer system (94) and comprising the steps:

   - Dividing the working area in a grid of pixels,
   - Computing a pose ($E_S$, $N_S$, ori) and corresponding variances ($Q_{ES,ES}$, $Q_{NS,NS}$. $Q_{ori, ori}$) and covariances ($Q_{ES,NS}$, $Q_{ES,ori}$, $Q_{NS,ori}$) for the station of the surveying instrument (10),
   - Computing for at the least one point of the pixels, the accuracy that can be achieved during measuring and/or layouting with the surveying instrument (10) based on the pose ($E_S$, $N_S$, ori), the variances ($Q_{ES,ES}$, $Q_{NS,NS}$, $Q_{ori, ori}$) and covariances ($Q_{ES,NS}$, $Q_{ES,ori}$ $Q_{NS,ori}$). and measuring accuracies ($\sigma_{HD}$, $\sigma_{HA}$),
   - Computing the accuracy map based on the accuracies computed for the points of the pixels,
   - Instructing a display (101) to visualize a graphical representation of the accuracy map.

2. Method of claim 1, wherein the working area is defined by the computer system based on the known coordinates of a set of control points in a first coordinate frame (CF-1) of the worksite (11).

3. Method of any one of claims 1 to 2, wherein the accuracy map is related to the worksite (11) and stored in the computer system (94) and/or stored to a memory connected to the computer system (94) and the accuracy map is provided for use in operating the surveying instrument (10).

4. Method of claim 3, wherein the accuracy map is provided for use in layouting a point of interest and upon selecting the point of interest and defining an accuracy threshold, it is checked by the computer system (94) if the accuracy threshold can be achieved, wherein:

- upon verification that the accuracy threshold can be achieved for the point of interest, a predefined action is performed, the predefined action comprising generating a message stating that the accuracy threshold can be achieved for the point of interest, and
- upon verification that the accuracy threshold cannot be achieved for the point of interest, a predefined action is performed, the predefined action comprising generating a message stating that the accuracy threshold cannot be achieved for the point of interest.

5. Method of any one of claims 1 to 4, wherein the pose and the corresponding variances and covariances are computed by a free-stationing algorithm based on a set of control points (CP-1, ..., CP-13) having known first coordinates in a first coordinate frame (CF-1) of the worksite (11) and at least a sub-set (CP-2, CP-13) of the set of control points having known second coordinates in a second coordinate frame (CF-2) of the surveying instrument (10).

6. Method of the previous claim 5, wherein from the set of control points at least one further control point (CP-10) being different from the sub-set of control points is selected, second coordinates are determined for the at least one further control point (CP-10) by the surveying instrument (10) in the second coordinate frame (CF-2), and a new sub-set of control points containing the sub-set of control points and the at least one further control point is defined, the method further comprising:

- Computing a new pose ($E_S$, $N_S$, ori) and corresponding variances ($Q_{ES,ES}$, $Q_{NS,NS}$. $Q_{ori, ori}$) and covariances ($Q_{ES,NS}$, $Q_{ES,ori}$, $Q_{NS}$,ori) for the station of the surveying instrument (10),
- Computing for at least one point of the pixels, the accuracy that can be achieved during measuring and/or layouting with the surveying instrument (10) based on the new pose, the variances ($Q_{ES,ES}$, $Q_{NS,NS}$, $Q_{ori, ori}$) and covariances ($Q_{ES,NS}$, $Q_{ES,ori}$, $Q_{NS,ori}$). and the measuring accuracies ($\sigma_{HD}$, $\sigma_{HA}$),
- Computing a new accuracy map based on the accuracies computed for the pixels of the grid,
- Instructing the display (101) to visualize a graphical representation of the new accuracy map.

7. A computer program comprising instructions, which, when executed by a computer system (94), cause the computer system (94) to carry out the method according to any one of claims 1 to 6.

8. An apparatus comprising means for carrying out the method according to any one of claims 1 to 6.

**FIG. 1**

FIG. 2A

**FIG. 2B**

**FIG. 3A**

**FIG. 3B**

S10 — Dividing the working area in a grid of pixels

S20 — Computing a pose and corresponding variances and covariances for the station of the surveying instrument

S30 — Computing for at the least one point of the pixels, the accuracy that can be achieved with the surveying instrument based on the pose, the variances and covariances, and measuring accuracies

S40 — Computing the accuracy map based on the accuracies computed for the points of the pixels

S50 — Instructing a display to visualize a graphical representation of the accuracy map

FIG. 4

FIG. 5A

FIG. 5B

FIG. 6A

FIG. 6B

Europäisches
Patentamt

European
Patent Office

Office européen
des brevets

# EUROPEAN SEARCH REPORT

**Application Number**

EP 23 22 0886

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/055102 A1 (RICHTER BERNHARD [AT] ET AL) 25 February 2021 (2021-02-25) | 1-3 | INV.<br>G01C15/00 |
| Y | * paragraphs [0076], [0098], [0115], [0148] - [0158]; claims 14,15; figures 2a,2b,2c,3,6d,7a,7b,7c * | 4,5 | |
| | ----- | | |
| Y | CN 112 964 237 A (BEIJING SOC OF SURVEYING AND MAPPING ET AL.)<br>15 June 2021 (2021-06-15)<br>* claim 1 * | 4 | |
| | ----- | | |
| Y | US 2010/309311 A1 (SVANHOLM SET [SE])<br>9 December 2010 (2010-12-09)<br>* paragraph [0031] * | 5 | |
| | ----- | | |

**TECHNICAL FIELDS SEARCHED (IPC)**

G01C
G01S

The present search report has been drawn up for all claims

| Place of search | Date of completion of the search | Examiner |
|---|---|---|
| The Hague | 23 May 2024 | de la Rosa Rivera, E |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 ...........................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 22 0886

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2024

| Patent document cited in search report | Publication date | Patent family member(s) | | Publication date |
|---|---|---|---|---|
| US 2021055102 A1 | 25-02-2021 | NONE | | |
| CN 112964237 A | 15-06-2021 | NONE | | |
| US 2010309311 A1 | 09-12-2010 | CN | 101932905 A | 29-12-2010 |
| | | CN | 101932906 A | 29-12-2010 |
| | | US | 2010303300 A1 | 02-12-2010 |
| | | US | 2010309311 A1 | 09-12-2010 |
| | | WO | 2009100773 A1 | 20-08-2009 |
| | | WO | 2009100774 A1 | 20-08-2009 |

EPO FORM P0459

For more details about this annex : see Official Journal of the European Patent Office, No. 12/82